# EUROPEAN PATENT APPLICATION

(11) **EP 4 588 851 A1**
(43) Date of publication of application: **23.07.2025**
(21) Application number: 24153065.8
(22) Date of filing: 22.01.2024
(51) Int. Cl.: B65G 1/04, B65G 1/06, B65G 57/03, B65G 59/02

(54) **A ROBOTIC VEHICLE**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to a robotic vehicle for handling multi-container frames, the multi-container frames configured to be stored in storage columns of an automated storage and retrieval system, the multi-container frames configured to accommodate a plurality of storage containers stored in an interior space of each multi-container frame, the robotic vehicle comprising: a drive system for moving the robotic vehicle on rails of a rail system above the storage columns; a first multi-container frame lifting device for lifting a multi-container frame; a second multi-container frame lifting device for lifting a multi-container frame; wherein each multi-container frame lifting device is configured to lift a multi-container frame from a storage column, such that a bottom of the multi-container frame is lifted above the rails of the rail system to allow the robotic vehicle to move freely on the rails of the rail system while carrying one or more multi-container frames.

## Description

### TECHNICAL FIELD

The disclosure relates to a robotic vehicle. More particularly, it relates to vehicle for handling multi-container frames, an assembly comprising a multi-container frame and a robotic vehicle, an automated storage and retrieval system and a method for operating a robotic vehicle.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robotic container-handling vehicles are central to the efficient operation of an automated storage and retrieval system. Developments in the design and operation of such robots can significantly improve the operation of automated storage and retrieval systems. It would be advantageous to improve the design of such robots.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a portion of the grid of Fig. 1 containing multi-container frames;
Fig. 6A shows a perspective view of two example multi-container frames;
Fig. 6B shows a side-on view of the example multi-container frames;
Fig. 6C shows a top-down view of the example multi-container frames;
Fig. 7A shows a cut-out view of an example multi-container frame, from which a first arrangement of containers stored within the multi-container frame is visible;
Fig. 7B shows a cut-out view of the example multi-container frame, from which a second arrangement of containers stored within the multi-container frame is visible;
Fig. 8A shows an example lifting device of a container-handling vehicle that is configured to couple to a multi-container frame to enable the multi-container frame to be lifted or lowered by the container-handling vehicle;
Fig. 8B shows a side-on view of the arrangement of Fig. 8A;
Fig. 8C shows the lifting device of Figs. 8A and 8B engaged with a multi-container frame;
Fig. 8D shows a side-on view of the arrangement of Fig. 8C;
Fig. 9 shows the example lifting device of Figs. 8A-D being lowered into contact with the multi-container frame;
Fig. 10 shows the example lifting device of Figs. 8A-D engaged with the multi-container frame;
Fig. 11 shows an example lifting device of a container-handling vehicle that is configured to couple to a container held within a multi-container frame to enable the container to be lifted or lowered by the container-handling vehicle;
Fig 12. shows a robotic container-handling vehicle lifting a container out of a multi-container frame;
Fig. 13 shows an example robotic container-handling vehicle on a portion of the grid of Fig. 1 containing multi-container frames;
Fig. 14 shows the example robotic container-handling vehicle of Fig. 13;
Fig. 15 shows example lifting devices of the example robotic container-handling vehicle of Figs. 13 and 14 on a portion of the grid of Fig. 1 containing multi-container frames;
Fig. 16 shows the example lifting devices of Fig. 15;
Fig. 17 shows example lifting devices shows the example lifting devices of Figs. 15 and 16;
Fig. 18 shows an example robotic container-handling vehicle on a portion of the grid of Fig. 1 containing multi-container frames;
Fig. 19 shows an example robotic container-handling vehicle; and
Fig. 20 shows a method of for operating a robotic container-handling vehicle.

Throughout the description and drawings, like reference numerals refer to like features.

### DETAILED DESCRIPTION

In overview, the disclosure relates to a robotic container-handling vehicle capable of handling multi-container frames and, in particular, capable of lifting a plurality of multi-container frames. Multi-container frames are configured to hold a plurality of containers. The multi-container frames may take any suitable form. For example, the multi-container frames may themselves comprise a container or may comprise a framework configured to accommodate containers therein within a cell of the storage and retrieval system grid. The multi-container frames can thereby be handled and stored within the grid of the automated storage and retrieval system similarly to any other container. The present inventors have recognised that significant efficiencies can be achieved by providing a robotic container-handling vehicle capable of lifting a plurality of multi-container frames.

In more detail, according to a first aspect there is provided a robotic vehicle for handling multi-container frames. Multi-container frames are configured to be stored in storage columns of an automated storage and retrieval system. They are also configured to accommodate a plurality of storage containers stored in an interior space of each multi-container frame. The robotic vehicle may have a drive system for moving the robotic vehicle on rails of a rail system above the storage columns as well as a first multi-container frame lifting device for lifting a multi-container frame. In addition, the robotic vehicle may have a second multi-container frame lifting device for lifting a multi-container frame. Each multi-container frame lifting device is configured to lift a multi-container frame from a storage column, such that a bottom of the multi-container frame is lifted above the rails of the rail system to allow the robotic vehicle to move freely on the rails of the rail system while carrying one or more multi-container frames.

In this manner, the robot of the first aspect is able to handle multiple multi-container frames, with the first and second lifting devices each able to hold a respective multiple multi-container frame. This enables more efficient handling of both containers and content within the containers of an automated storage and retrieval system.

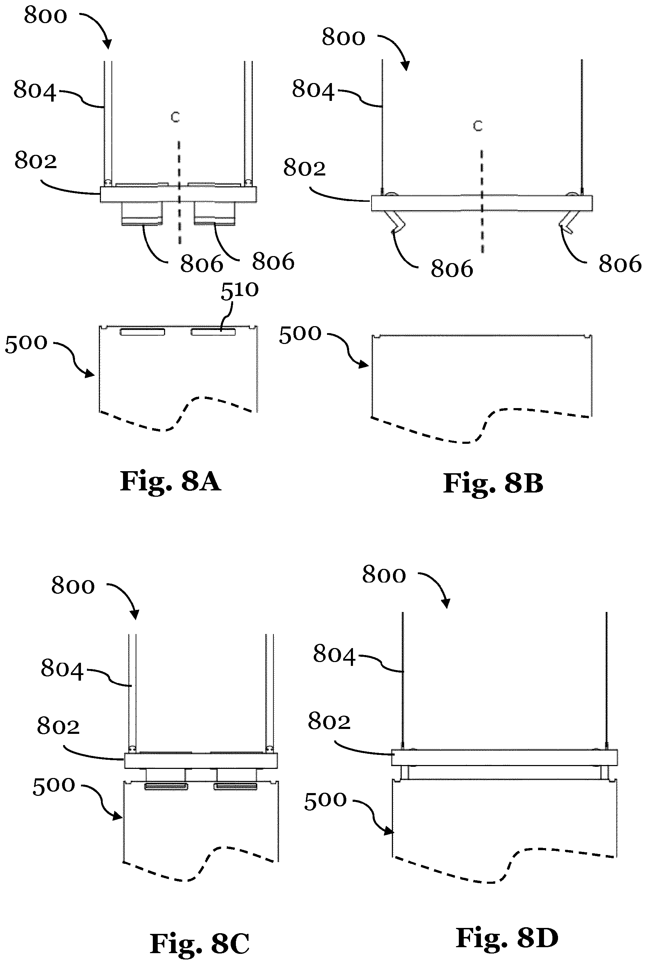

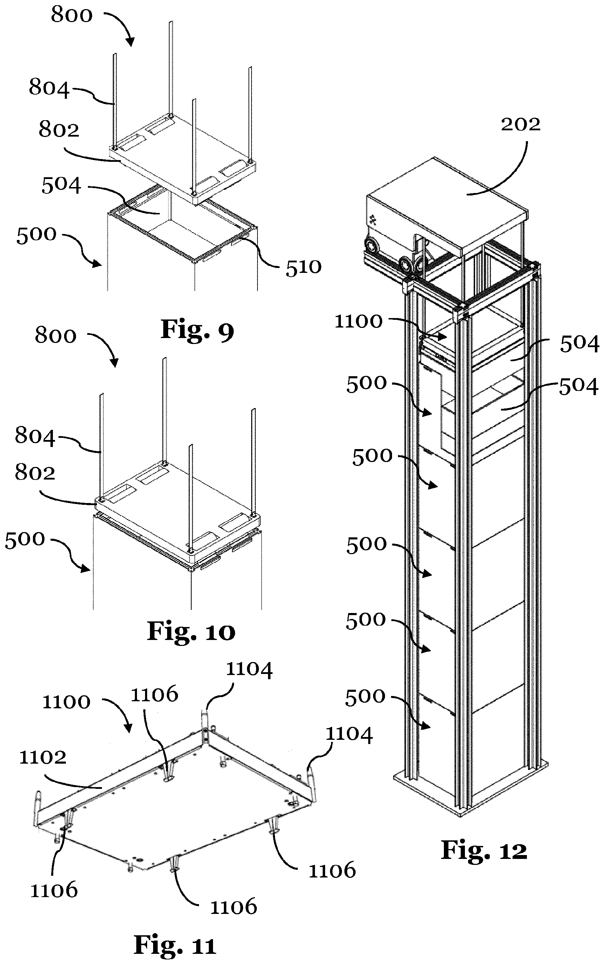

The first multi-container frame lifting device and/or the second multi-container frame lifting device may, in some implementations, be a lifting device 800 described below and shown in Figs. 8A-10 or a lifting device 1100 described below and shown in Fig. 11. In some implementations, the first multi-container frame lifting device is a lifting device 800 as described below and the second multi-container frame lifting device is a lifting device 1100 as described below. In this manner, the robot is able to handle different types of containers.

In some implementations, the first multi-container frame lifting device and/or the second multi-container frame lifting device may comprise a lifting frame connected to lifting bands. In some implementations, the lifting frame may comprise latches for gripping onto a multi-container frame, for example the latches 806 described below. In some implementations, the lifting frame may comprise grippers configured to releasably engage connecting recesses a storage container located within a multi-container frame, for example the grippers 1106 described below.

In some implementations, a vehicle body of the robotic vehicle may have a footprint that corresponds to the footprint of at least two storage columns of the automated storage and retrieval system. In some implementations, a vehicle body of the robotic vehicle may have a footprint that corresponds to the footprint of three, four, five or six storage columns of the automated storage and retrieval system. In some implementations, the robot comprises three, four, five or six multi-container frame lifting devices.

In some implementations, the rail system may be rail system 116 described below and may comprise a first set of rails arranged in a horizontal plane and extending in a first direction and a second set of rails arranged in the horizontal plane and extending in a second direction which is orthogonal to the first direction, wherein the first and second sets of rails form a grid pattern comprising a plurality of grid cells in the horizontal plane, wherein each grid cell comprises a grid opening defined by rails of the first set of rails and rails of the second set of rails. In some implementations, each storage column may be located vertically below a grid opening. In some implementations, each multi-container frames may be configured to accommodate a plurality of storage containers stored one on top or the other.

In some implementations, each of the first multi-container frame lifting device and second multi-container frame lifting device may be arranged to align with a respective storage column of the automated storage and retrieval system and simultaneously lift a multi-container frame from the respective storage column.

In some implementations, the vehicle body of the robotic vehicle may comprise a first compartment configured to receive a multi-container frame lifted into the first compartment by the first multi-container frame lifting device. In some implementations, the first compartment may comprises at least one guide configured to guide the first multi-container frame into the first compartment. In this manner, a multi-container frame can be securely stored within the robot.

In some implementations, the vehicle body of the robotic vehicle may comprise a second compartment configured to receive a multi-container frame lifted into the second compartment by the second multi-container frame lifting device. In some implementations, the second compartment comprises at least one guide configured to guide the second multi-container frame into the first compartment. In this manner, a multi-container frame can be securely stored within the robot.

In some implementations, the vehicle body may comprise a cavity configured to receive a first multi-container frame lifted into the cavity by the first multi-container frame lifting device and configured to receive a second multi-container frame lifted into the cavity by the second multi-container frame lifting device. In some implementations, the cavity may comprises at least one guide configured to guide the first and/or second multi-container frame into the first compartment. In some implementations, the first and second multi-container frame lifting devices may be positioned within the cavity when fully retracted. In this manner, a multi-container frame can be securely stored within the robot.

In some implementations, the drive system may comprise a wheel arrangement. In some implementations, the wheel arrangement may be arranged on the vehicle body. In some implementations, the drive system may be configured to drive the robotic vehicle in at least one of a first direction and a second direction along the rails of the rail system, the first direction and the second direction being orthogonal.

In some implementations, the wheel arrangement comprises a first set of wheels and a second set of wheels and the first set of wheels is displaceable between a first position, in which the first set of wheels permits movement of the robotic vehicle along the first direction, and a second position, in which the second set of wheels permits movement of the robotic vehicle along the second direction.

According to another aspect of the present disclosure, an assembly comprising one or more multi-container frames and a robotic vehicle as described above is provided. In some implementations, the multi-container frame may comprise an interior space configured to accommodate a plurality of storage containers, optionally, wherein the plurality of storage containers are stored one on top of another in a vertical stack.

According to another aspect of the present disclosure, an automated storage and retrieval system is provided, comprising a plurality of storage columns, a rail system located above the storage columns, a plurality of multi-container frames configured to be stored in the storage columns of the automated storage and retrieval system, and a robotic vehicle as described above. In some implementations, the rail system may be as described above. In some implementations, each storage column may be located vertically below a grid opening. In some implementations, each multi-container frame may be configured to accommodate a plurality of storage containers in an interior space of the respective multi-container frame, optionally, wherein the plurality of storage containers are stored one on top of another in a vertical stack.

According to another aspect of the present disclosure, a method for operating a robotic vehicle as described above in an automated storage and retrieval system. The method may comprise lifting a first multi-container frame from a storage column of the automated storage and retrieval system using the first multi-container frame lifting device and lifting a second multi-container frame from a storage column of the automated storage and retrieval system using the second multi-container frame lifting device.

In some implementations, the method may further comprise the step of moving the robotic vehicle after lifting the first multi-container frame and before lifting the second multi-container frame and, such that the second multi-container frame lifting device lifts the second multi-container frame from the same storage column as the first multi-container frame.

In some implementations, the first multi-container frame and the second multi-container frame are simultaneously lifted from different storage columns by the first multi-container frame lifting device and the second multi-container frame lifting device.

According to another aspect of the present disclosure, a computer-readable medium is disclosed. The computer-readable medium comprises instructions which, when executed by a computer, cause the computer to carry out any of the methods described herein.

According to another aspect of the present disclosure, a computer program is disclosed. The computer program comprises instructions which, when the program is executed by a computer, cause the computer to carry out any of the methods described herein.

According to another aspect of the present disclosure, a controller is disclosed. The controller comprises a processor and a memory, the controller configured to carry out any of the methods described herein.

The systems and methods introduced in the above overview will now be described in further detail. Various non-limiting example implementations will be described to aid understanding.

### Automated storage and retrieval system overview

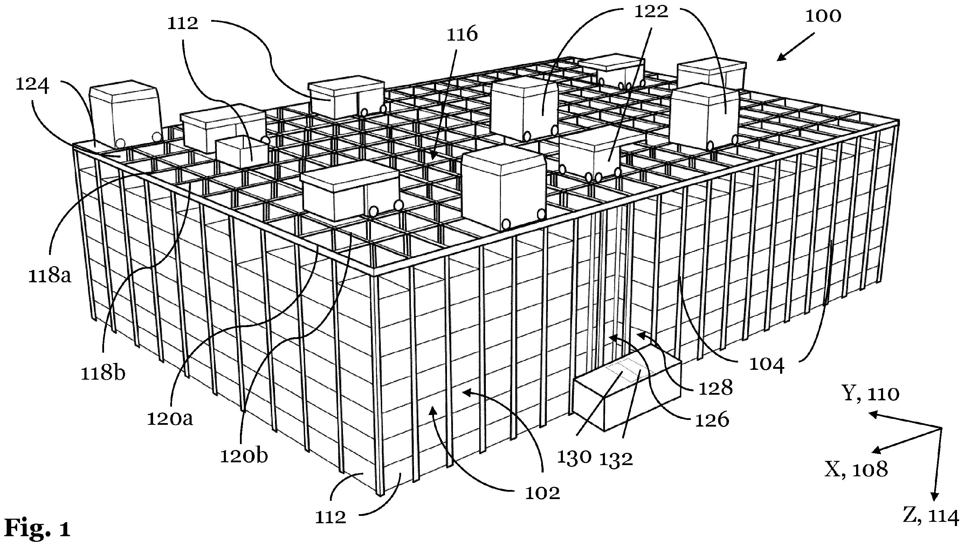

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, robotic vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

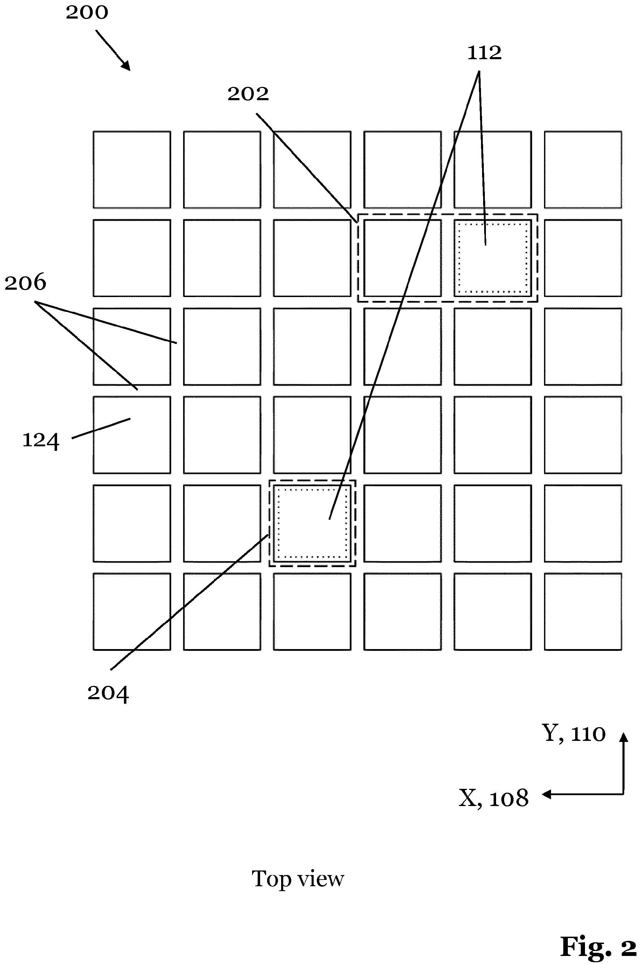

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

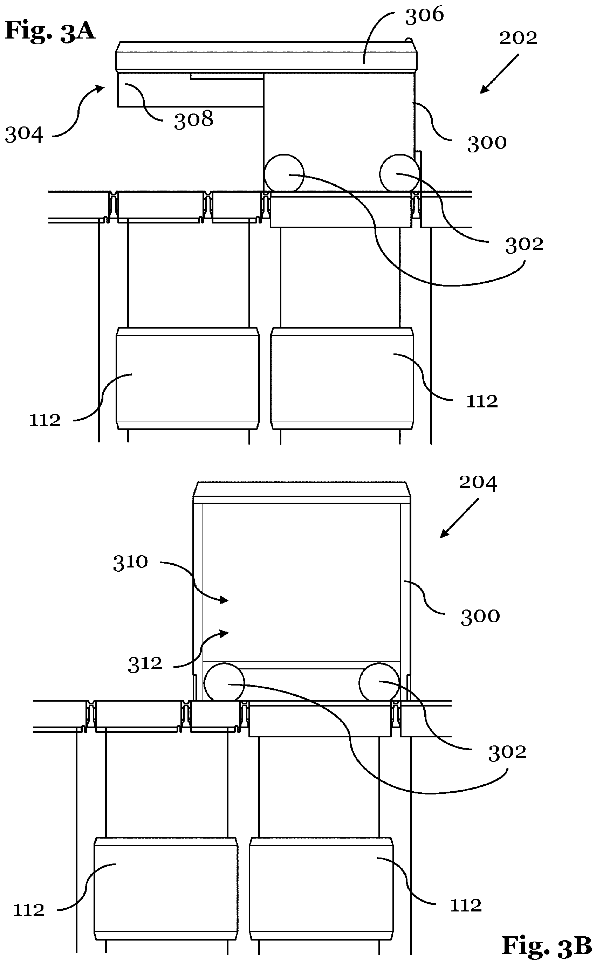

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

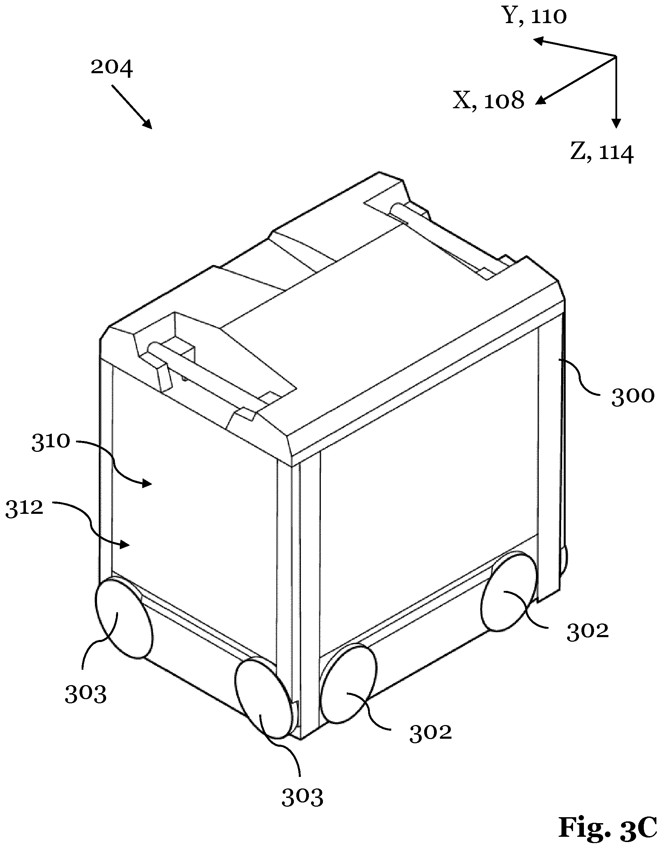

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

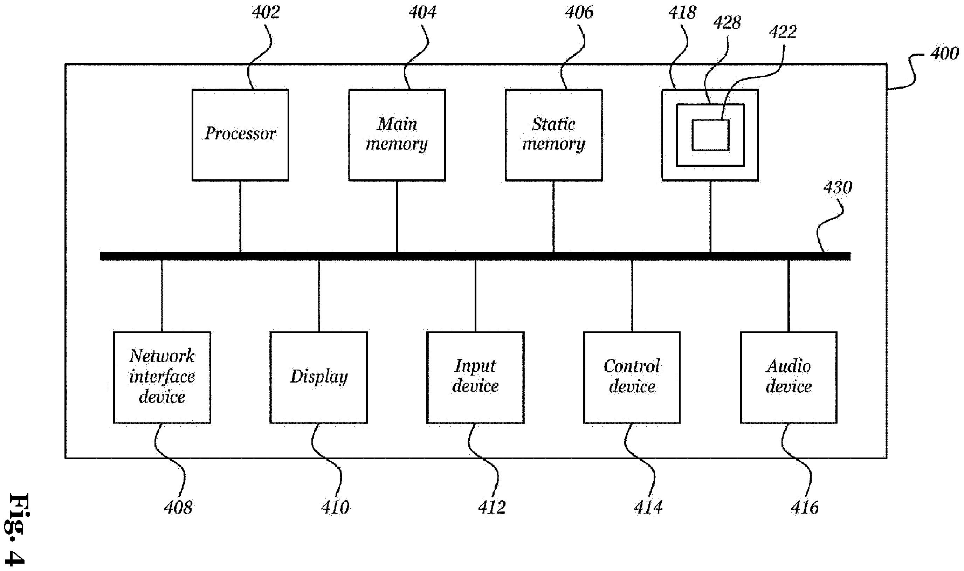

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

The present disclosure relates to multi-container frames, in other words frames or containers that are themselves configured to hold a plurality of other containers. These multi-container frames can be stored and handled in the automated storage and retrieval system of the present disclosure in the same manner as the bins or containers 112 referenced above in relation to Figures 1-4. Accordingly, multi-container frames represent an example implementation of the containers or bins 112 described above and shown in Figs. 1, 2, 3A and 3B. A multi-container frame may be configured to accommodate between two and six containers in a typical implementation, although larger multi-container frames are possible.

In the primary implementation of the present disclosure, the multi-container frames are configured to accommodate a plurality of bins or containers within them, stacked on top of one another. In that case, the multi-container frame may be referred to as a "stacker frame" because the containers held within it are stacked on top of one another. For simplicity, the remainder of this disclosure will focus on this form of multi-container frame. However, it will be appreciate that in other implementations (not shown in the accompanying Figures), the multi-container frame may accommodate a plurality of containers side-by-side or otherwise arranged, and the containers may not be stacked on top of one another within the multi-container frame. Accordingly, while the remainder of this disclosure focuses on stacker frames, this is not to be considered as limiting and the present invention relates to any form of multi-container frame configured to accommodate a plurality of containers within it.

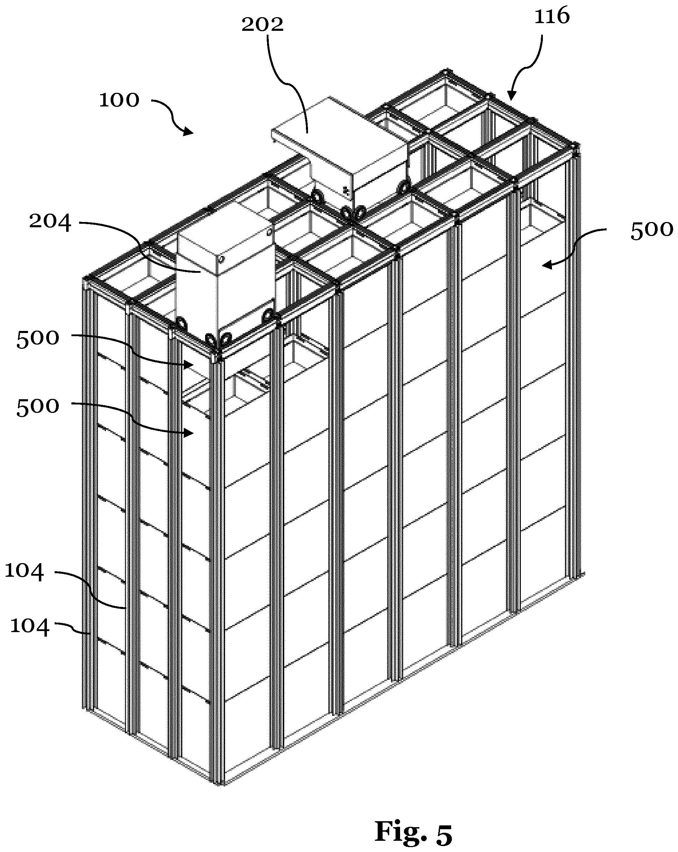

Turning now to Figure 5, this figure shows a subsection of the automated storage and retrieval system shown in Fig. 1. A portion of the grid 100 can be seen together with robotic container-handling vehicles, robotic vehicles, or robots 202, 204 operating on the rail system 116. In the system shown in Figure 5, the containers or bins 112 are multi-container frames 500. As noted above, in this implementation the multi-container frames 500 are all stacker frames 500, in which the containers are stored one on top of the other. Accordingly, for simplicity, the phrase "stacker frame" will be used hereafter. However, the following description applies to any form of multi-container frame.

As can be seen from Figure 5, one of the stacker frames 500 is in the process of being lifted by robot 204. This is performed in a similar manner as discussed above in relation to the containers 112 of Figure 1. Further details of how stacker frames 500 are lifted will be described below.

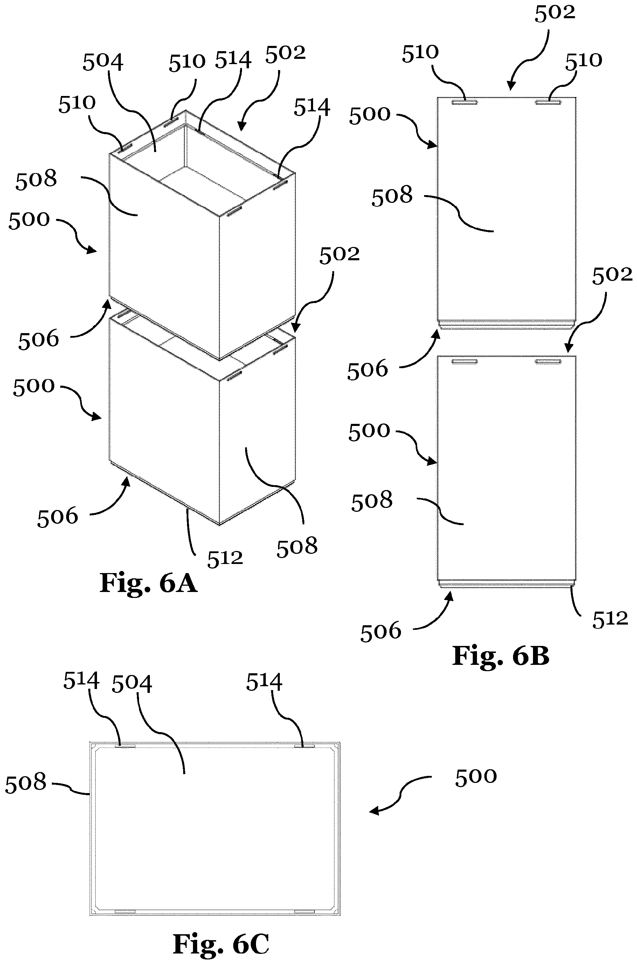

Example stacker frames 500 are shown in more detail in Figs. 6A to 6C. Each of the stacker frames 500 has an open top end 502 for allowing a storage container 504 to pass into the stacker frame 500. As already noted, each stacker frame 500 is configured to accommodate a plurality of storage containers 504 stored one on top of another in a vertical stack within the stacker frame 500. Each stacker frame 500 is therefore configured to support the lowermost storage container 504 within the stacker frame 500. One or more further storage containers 504 are then placed on top of the lowermost storage container 504, with each container 504 supporting the container placed above it. The storage containers 504 stored within stacker frame 500 may correspond to the containers 112 of Figure 1, or may be specially designed containers configured for storing within a stacker frame 500.

Each stacker frame 500, comprises a bottom end 506, for supporting a lowermost storage container 504. In the present example, side walls 508 extend between the bottom end 506 and the top end 502, although in other examples stacker frame 500 may simply comprise a framework defining the frame within which the containers 504 are held and so side walls 508 may be largely omitted.

In this implementation, connecting recesses 510 are arranged at the top end 502 within opposing side walls 508. The connecting recesses 510 are arranged such that they are accessible and protrude above the top of the uppermost storage container 504 in the stack of storage containers 504 within each stacker frame 500 when the stacker frame 500 is full. These recesses enable the stacker frames 500 to be placed into and lifted out of a storage column of the grid, as will be described in further detail below.

To facilitate efficient storage and enable stacker frames 500 themselves to be stacked, the bottom end 506 of each stacker frame 500 may have a recessed portion 512 having an outer periphery being smaller than, i.e. configured to fit within, an inner periphery of the top end 502 of another stacker frame 500. In this manner, the stacker frames 500 may be stacked on top of one another while horizontal movement between them is restricted to improve stability.

As can be seen in the top-down view of a stacker frame 500 in Figure 6C, each storage container 504 held within the stacker frame 500 in this implementation includes connecting recesses 514. These recesses 514 are arranged in the upward facing surface or upper rim of the sidewalls of the storage container 504. These recesses enable the containers 504 to be placed into and lifted out of the stacker frame 500, as will be described in further detail below.

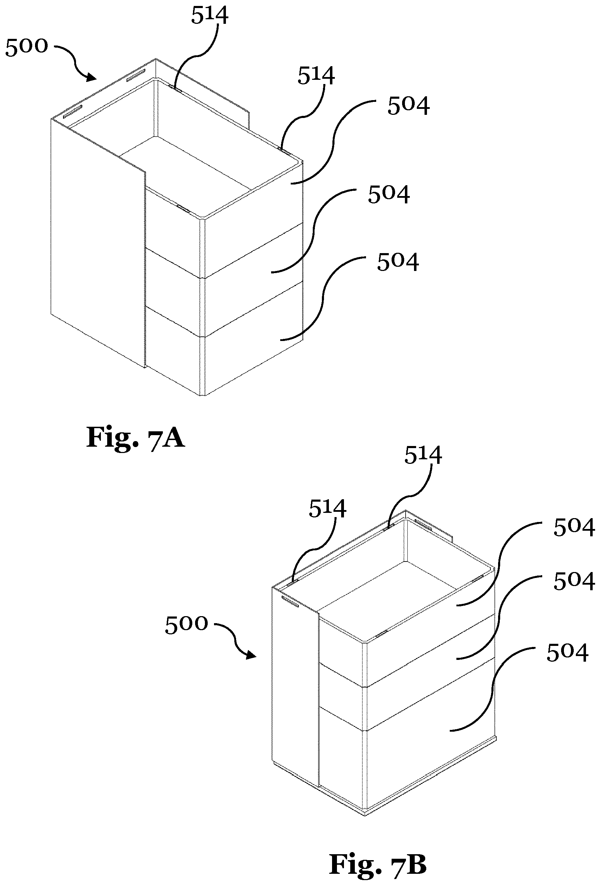

Figs. 7A and 7B show stacker frames 500 with a cut-away section to better illustrate the stacking of the storage containers 504 inside the stacker frame 500. The stacker frame 500 shown in Fig. 7A has three evenly sized storage containers 504, whereas in the stacker frame 500 shown in Fig. 7B the lowermost storage container 504 is larger in height than the other storage containers 504. The number, shape and size of storage containers 504 that can be accommodated within any given stacker frame 500 may vary. As noted above, typically there are between two and six storage containers 504 within a stacker frame 500 when the stacker frame 500 is full.

As noted above, stacker frames 500 can be stored in grid 100 and moved around by container-handling vehicles 202, 204 in a similar manner to ordinary bins or containers 112. A variety of modifications may be made to the container-handling vehicles 202, 204 to enable them to better interact with stacker frames 500 and the containers 504 stored within stacker frames. Some example implementations detailing such modifications will now be described, however it will be appreciated that other mechanisms maybe provided additionally or alternatively.

Figs. 8A, 8B, 8C, 8D, 9 and 10 show an example lifting device 800 to enable container-handling vehicles 202, 204 to lift stacker frames 500. The lifting device 800 may be provided as the lifting device 304 of container-handling vehicle 202 or the lifting device 312 of container-handling vehicle 204. It may also be used in the lifting device of any of the robots 1300, 1800 and 1900 described below. The lifting device 800 is configured to engage with a stacker frame 500 such that the stacker frame 500 may be lifted or lowered into or out of a column 102 of the grid

The lifting device 800 in this example comprises a lifting frame 802 connected to lifting bands 804, which are windable/winchable from at least one lifting shaft (not depicted) of the container-handling vehicle 202, 204 to lift or lower the lifting frame 802. The lifting frame 802 comprises a horizontal element, as depicted, and latches 806 arranged on the lifting frame 802. The latches 806 are an example implementation of a gripping device, such as gripping device 308 described above. The latches 806 are configured to move between a release position, as shown in Figs. 8A, 8B and 9, and a connected position, as shown in Figs. 8C, 8D and 10. In the release position the latches 806 are closer to a vertical centreline C of the lifting frame 802 than in the connected position. When moving from the release position to the connected position, the latches 806 are moved away from the vertical centreline C and are configured to extend through the connecting recesses 510 in the side wall 508 of a stacker frame 500.

The latches 806, when engaged with connecting recesses 510, are positioned within an interior space of the stacker frame 500. This is particularly advantageous as the space provided between adjacent columns 102 of the grid 100 can be reduced as the lifting device 800 requires no clearance outside of the stacker frame 500.

Figs. 11 and 12 show a lifting device 1100 for lifting storage containers 504 out of stacker frames 500. The lifting device 1100 may be provided as the lifting device 304 of container-handling vehicle 202 or the lifting device 312 of container-handling vehicle 204. It may also be used in the lifting device of any of the robots 1300, 1800 and 1900 described below. The lifting device 1100 is configured to engage a storage container 504 for lifting or lowering the storage container 504 relative to a stacker frame 500 in which the storage container 500 is stored.

The lifting device 1100 may comprise a lifting frame 1102 connected to lifting bands 1104, which are windable/winchable from at least one lifting shaft (not depicted) of the container-handling vehicle 202, 204 to lift or lower the lifting frame 1102. The lifting frame 1102 comprises a horizontal element, as depicted, and grippers 1106 arranged on the lifting frame 1102. The grippers 1106 are configured to releasably engage connecting recesses 514 arranged in an upper rim of a storage container 504 as illustrated in Figs. 6A, 6C, 7A and 7B.

Container-handling vehicles 202, 204 may be configured to retrieve a storage container 504 via an open top end 502 of a stacker frame 500, as shown for example in Fig. 12. In this figure the uppermost stacker frame 500 in Fig. 12 has a cut-away section to better illustrate the stacking of the storage containers 504 inside the stacker frame 500. The topmost container 504 has been lifted out of the top most stacker frame 500 by container-handling vehicle 202.

To enable a storage container 504 to be retrieved from a stacker frame 500 in this way, the lifting frame 1102 has an outer periphery configured to fit within an inner periphery of the side walls of the stacker frame 500. The inner periphery of the side walls of the stacker frame 500 may be configured to guide the lifting frame 1102 when within the stacker frame 500.

Example lifting mechanisms to enable a container-handling vehicle to lift a stacker frame 500 or container 504 from a stacker frame have been described with reference to Figures 8A-12. However, it will be appreciated that these mechanisms are merely exemplary. Other mechanisms can be used, and both stacker frames 500 and containers 504 may be modified appropriately to accommodate an alternative form of lifting mechanisms.

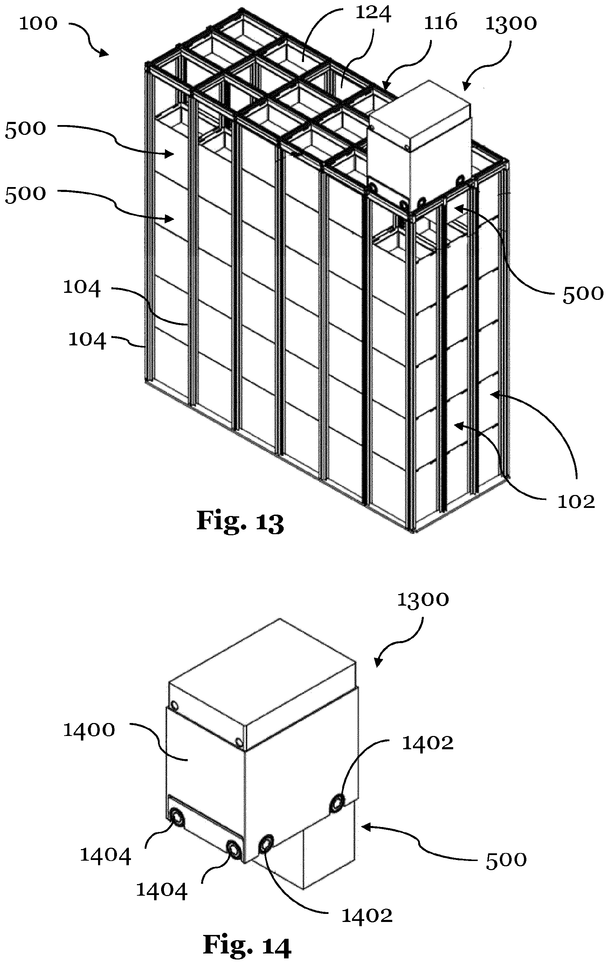

Figure 13 shows a subsection of the automated storage and retrieval system shown in Fig. 1. A portion of the grid 100 can be seen together with a robotic container-handling vehicle 1300 (also known as a robotic vehicle or robot) operating on the rail system 116. In the system shown in Figure 13, the containers or bins 112 are multi-container frames 500. As noted above, in this implementation the multi-container frames 500 are all stacker frames 500, in which the containers are stored one on top of the other. Accordingly, for simplicity, the phrase "stacker frame" will be used hereafter. However, the following description applies to any form of multi-container frame.

Robot 1300 may operate in a similar manner to robots 202 and 204 described above and may have any of the features of those robots. For example, the vehicle body 1400 of robot 1300 may contain operational equipment (not shown) for the robot 1300 including drive, power and control systems.

As can be seen from Figure 13, one of the stacker frames 500 is in the process of being lifted by robot 1300. This is performed in a similar manner as discussed above in relation to the containers 112 of Figure 1. Further details of how stacker frames 500 are lifted are described above in relation to lifting device 800 shown in Figs. 8A, 8B, 8C, 8D, 10A 9 and 10 and lifting device 1100 shown in Figs. 11 and 12, which may each be provided as the lifting device in the robotic container-handling vehicle 1300.

As can be seen from Figure 13, robot 1300 spans two access openings 124 above the columns 102. In other words, the robot 1300 has a footprint that corresponds to the footprint of at least two storage columns 102 of the automated storage and retrieval system.

The robot 1300 is shown in isolation in Fig. 14 with a stacker frame 500 being held by the robot 1300.

The robot 1300 comprises a first set of wheels 1402 and a second set of wheels 1404 at a lower side of a vehicle body 1400 of the robot 1300. The first set of wheels 1402 is arranged at first opposite sides of the vehicle body 1400 for moving the robot 1300 in the first direction X 108. The second set of wheels 1404 is arranged at second opposite sides of the vehicle body 1400, for moving the robot 1300 in the second direction110 Y, orthogonal to the first direction X. In this example, the first set of wheels 1402 is displaceable in a vertical direction Z 114 between a first position, in which the first set of wheels 1402 allows movement of the robot 1300 in the first direction X 108, and a second position, in which the second set of wheels 1404allows movement of the robot 1300 in the second direction Y 110.

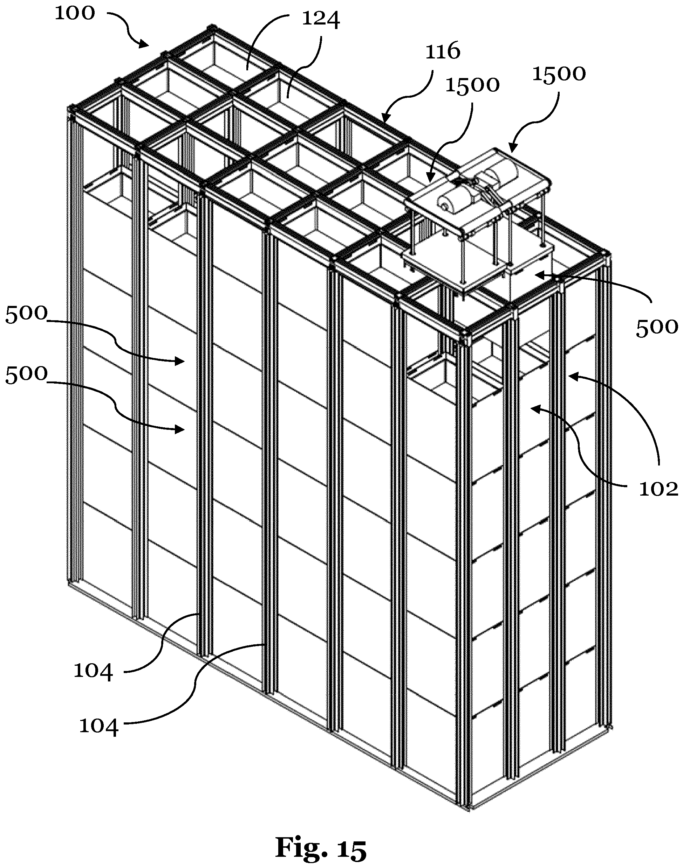

Fig. 15 shows a subsection of the automated storage and retrieval system shown in Fig. 1. A portion of the grid 100 can be seen together with two stacker frame lifting devices 1500 of the robot 1300 in isolation without the other features of the robot 1300. As can be seen, the lifting devices 1500 together span two access openings 124 above the columns 102. In other words, the lifting devices 1500 each have a footprint that corresponds to the footprint of a storage column 102 and together have a footprint that corresponds to the footprint of at least two storage columns 102 of the automated storage and retrieval system.

In some implementations, the lifting devices are directly coupled together. In other implementations, the lifting devices may be individually coupled to the vehicle body 1400 of the robot 1300.

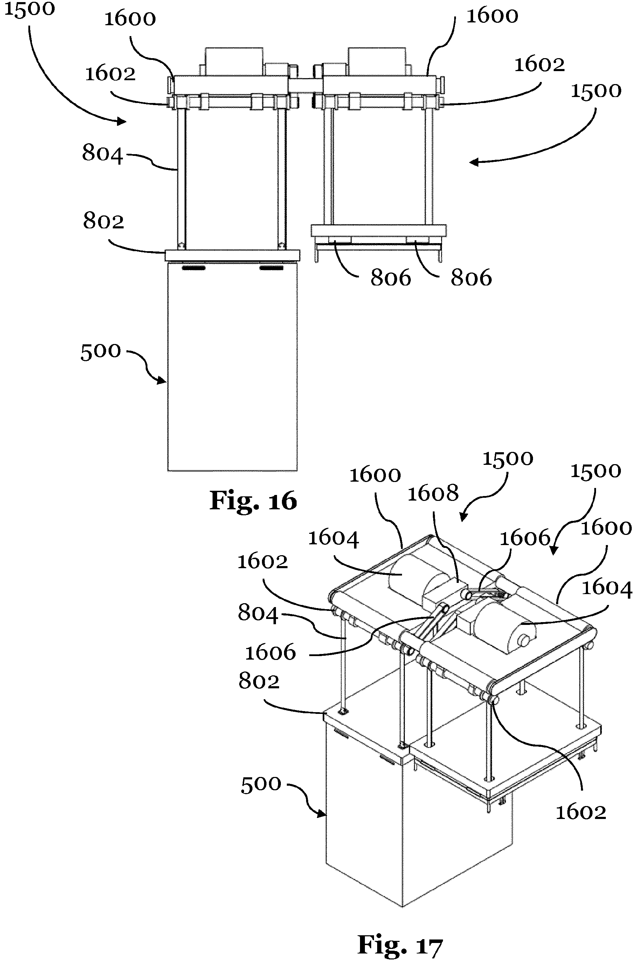

The lifting devices 1500 can be seen in isolation in Figs 16 and 17. The lifting devices 1500 each comprise a lifting frame 802, each lifting frame 802 connected to lifting bands 804 as described above and shown in Figs. 8A, 8B, 8C, 8D, 9 and 10. Each lifting frame 802 has latches 806 that act as a stacker frame gripper and are configured to engage a stacker frame 500. In the depicted example, each lifting frame 802 is attached to four lifting bands 804. The lifting frames 802 lifting bands 804 and latches 806 may be the same as those described above and shown in Figs. 8A, 8B, 8C, 8D, 9 and 10. The lifting devices 1500 devices may be configured to be positioned within the vehicle body 1400 of the robot 1300 (or a cavity or compartment therein) when fully retracted.

In some implementations, either or both of the lifting devices 1500 could be provided with lifting frame 1102 as described and shown in Fig. 11. In place of lifting frame 802. A robot 1300 with such lifting devices 1500 would be able to lift containers 504.

Each lifting frame 802 is coupled to a respective lifting frame displacement device 1600 via the lifting bands 804. Each lifting frame displacement device 1600 is configured to move its respective lifting frame 802 in a vertical direction, i.e. along the direction Z 114. This may be accomplished by winding or winching the lifting bands 804 about lifting shaft (not depicted).

Each lifting frame displacement device 1600 comprises two parallel lifting shafts 1602 that are spaced apart from each other. The lifting shafts 1602 are configured to wind up or unwind the lifting bands 804 and are each coupled with a lifting motor 1604 through a belt 1606. By rotating the lifting motor 1604, the belts 1606 are driven through a gear 1608. The belts 1606 drive the lifting shafts 1602 to wind up or unwind the lifting bands 804. In this manner, the lifting frame 802 and any stacker frame 500 coupled to it is lifted or lowered.

When a lifting frame displacement device 1600 is in a fully retracted position, any stacker frame 500 held by the respective lifting frame 802 is lifted above the rail system 116 and thus does not collide with the rails of the rail system 116.

In an example implementation, the stacker frame 500 is moved inside the robot 1300 as shown in Figs. 13 and 14. The vehicle body 1400 of the robot 1300 may comprise a cavity (not shown) configured to receive a stacker frame 500 lifted into the cavity by one of the stacker frame lifting devices 1500 and/or configured to receive a stacker frame 500 lifted into the cavity by another of the stacker frame lifting devices 1500. Two stacker frames 500 may be lifted into the same cavity by the lifting devices 1500. Alternatively, the vehicle body 1400 of the robot 1300 may comprise a first compartment (not shown) configured to receive a first stacker frame 500 lifted into the first compartment by the one of the stacker frame lifting devices 1500 and a second compartment (not shown) configured to receive a second stacker frame 500 lifted into the second compartment by another of the second stacker frame lifting devices 1500.

The cavity, the first compartment and/or the second compartment may comprise one or more guiding structures (not shown) within the cavity, first and/or second compartments for guiding stacker frames 500 as they are lifted into the cavity, first and/or second compartments. The guiding structures could take the form of protrusions that correspond to the outer shape of the stacker frame.

In an example implementation, stacker frames 500 are lifted by the lifting devices 1500 when both sets of wheels 1402 and 1404 are in contact with the rails of the rail system 116. This improves stability during lifting of stacker frames 500.

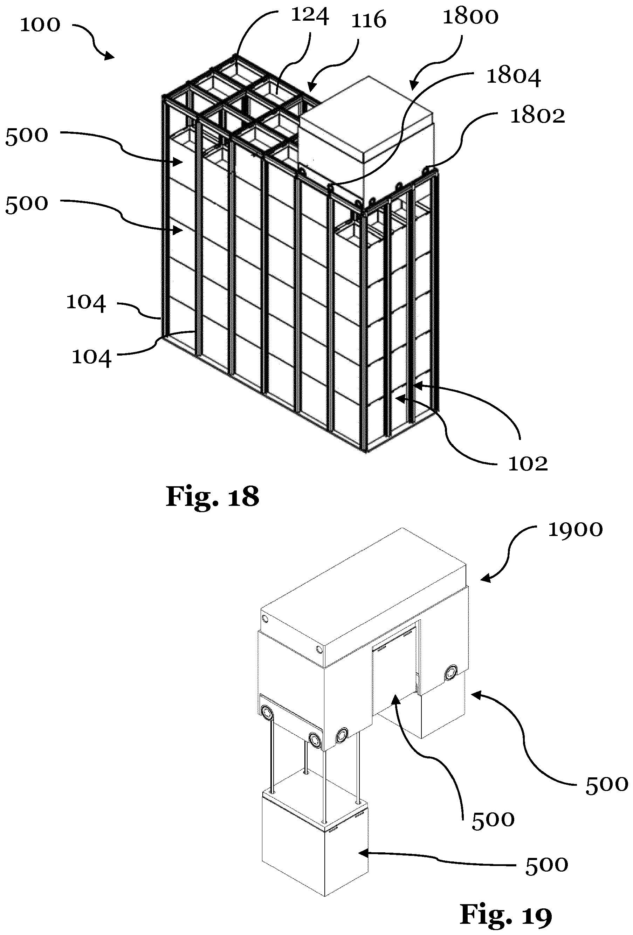

Fig. 18 shows a robotic container-handling vehicle 1800 (also known as a robotic vehicle or robot) on a portion of the grid 100, the robot 1800 having a footprint that corresponds to the footprint of six storage columns 102 of the automated storage and retrieval system in a 2×3 arrangement. The robot 1800 may have up to six lifting devices, each lifting device corresponding to a respective storage columns 102. Such a robot would be capable of simultaneously lifting six stacker frames 500 from respective storage columns 102.

Robot 1800 may operate in a similar manner to robots 202, 204 and 1300 described above and may have any of the features of those robots. For example, the vehicle body of robot 1800 may contain operational equipment (not shown) for the robot 1800 including drive, power and control systems.

Robot 1800 has a first set of wheels 1802 and a second set of wheels 1804. The first set of wheels 1802 is displaceable in a vertical direction Z114 between a first position, in which the first set of wheels 1802 allows movement of the robot 1800 in the first direction X 108, and a second position, in which the second set of wheels 1804 allows movement of the robot 1800 in the second direction Y 110. The first set of wheels 1802 and the second set of wheels 1804 each have more than just two pairs of wheels on opposite sides of the robot 1800, in order to provide improved stability and support on the rail system 116. In the depicted example, the first set of wheels 1802 comprises three wheels on either side of the robot 1800 and the second set of wheels 1804 comprises three wheels on either side of the robot 1800. The first set of wheels 1802 and the second set of wheels 1804 may operate in a similar manner to the first set of wheels 1402 and a second set of wheels 1404 of robot 1300, as described above.

Fig. 19 shows a robotic container-handling vehicle 1900 (also known as a robotic vehicle or robot) having a footprint that corresponds to the footprint of three storage columns 102 of the automated storage and retrieval system. The robot 1900 has two closed compartments for receiving stacker frames 500 at either end and an open area in the middle for receiving a stacker frame 500. The robot 1900 has three lifting devices, each lifting device corresponding to a respective storage columns 102. Such a robot is capable of simultaneously lifting three stacker frames 500 from respective storage columns 102.

Advantageously, such a robot is able to access stacker frames 500 stored in a storage column 102 and protruding above the height of the rail system 116. Such a stacker frame could have temporarily been stored at the top of a column 102 when, for example, accessing a stacker frame beneath that stacker frame. The open sides of the central portion of the robot 1900 enable the robot to be driven over such a protruding stacker frame and to subsequently lift it up.

Robot 1900 may operate in a similar manner to robots 202, 204, 1300 and 1800 described above and may have any of the features of those robots. For example, the vehicle body of robot 1900 may contain operational equipment (not shown) for the robot 1900 including drive, power and control systems.

Robots with other numbers of lifting devices or footprints corresponding to other numbers of storage columns 102 may be provided. For example, a robot with anywhere between two and six lifting devices may be provided.

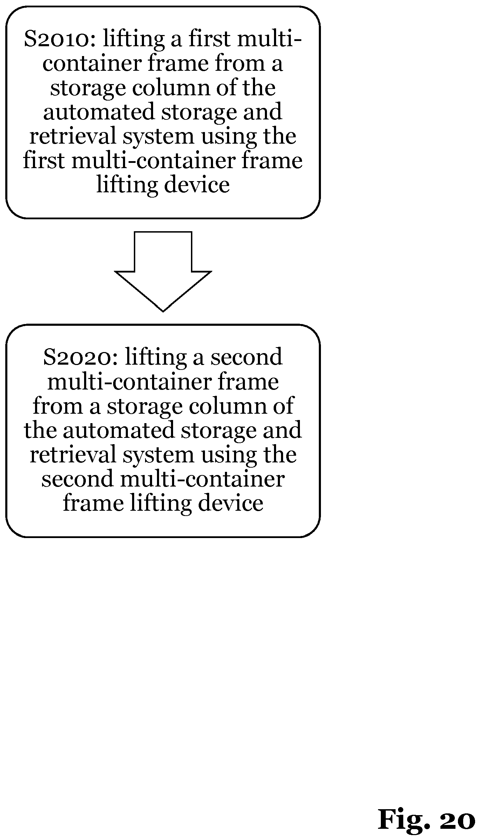

A method of for operating a robotic vehicle, such as any of robotic vehicles 1300, 1800 or 1900 described above is shown in Fig. 20, in an automated storage and retrieval system such as the an automated storage and retrieval system shown in Fig.1. The method of Fig. 20 may be performed by a controller of the automated storage and retrieval system, for example processing system 400 described above with reference to Fig. 4. The controller may in some implementations work alongside a Warehouse Management System configured to control and oversee other aspects of the storage and retrieval system, such as stock monitoring, order monitoring, climate control etc. The method of Fig. 20 may be performed by transmitting instructions to or receiving instructions from such a Warehouse Management System.

Step 2010 comprises lifting a first multi-container frame 500 from a storage column 102 of the automated storage and retrieval system using the first multi-container frame lifting device 1500 of a robotic vehicle 1300, 1800 or 1900.

Step 2020 comprises lifting a second multi-container frame 500 from a storage column of the automated storage and retrieval system using the second multi-container frame lifting device of the robotic vehicle 1300, 1800 or 1900.

The method may optionally comprise the step of moving the robotic vehicle 1300, 1800 or 1900 after lifting the first multi-container frame and before lifting the second multi-container frame and, such that the second multi-container frame lifting device lifts the second multi-container frame from the same storage column as the first multi-container frame. In performing this step, the robot may be moved such that the second multi-container frame lifting device is moved over the column 102 from which the first multi-container frame lifting device lifted the first multi-container frame.

Alternatively, the first multi-container frame and the second multi-container frame may be simultaneously lifted from different storage columns 102 by the first multi-container frame lifting device and the second multi-container frame lifting device.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic vehicle for handling multi-container frames, the multi-container frames configured to be stored in storage columns of an automated storage and retrieval system, the multi-container frames configured to accommodate a plurality of storage containers stored in an interior space of each multi-container frame,
the robotic vehicle comprising:
a drive system for moving the robotic vehicle on rails of a rail system above the storage columns;
a first multi-container frame lifting device for lifting a multi-container frame;
a second multi-container frame lifting device for lifting a multi-container frame;
wherein each multi-container frame lifting device is configured to lift a multi-container frame from a storage column, such that a bottom of the multi-container frame is lifted above the rails of the rail system to allow the robotic vehicle to move freely on the rails of the rail system while carrying one or more multi-container frames.

2. The robotic vehicle according to claim 1,
wherein a vehicle body of the robotic vehicle has a footprint that corresponds to the footprint of at least two storage columns of the automated storage and retrieval system.

3. The robotic vehicle according to claim 1 or 2,
wherein each of the first multi-container frame lifting device and second multi-container frame lifting device is arranged to align with a respective storage column of the automated storage and retrieval system and simultaneously lift a multi-container frame from the respective storage column.

4. The robotic vehicle according to any preceding claim,
wherein a/the vehicle body of the robotic vehicle comprises a first compartment configured to receive a multi-container frame lifted into the first compartment by the first multi-container frame lifting device, optionally, wherein the first compartment comprises at least one guide configured to guide the first multi-container frame into the first compartment.

5. The robotic vehicle according to any preceding claim,
wherein a/the vehicle body of the robotic vehicle comprises a second compartment configured to receive a multi-container frame lifted into the second compartment by the second multi-container frame lifting device, optionally, wherein the second compartment comprises at least one guide configured to guide the second multi-container frame into the first compartment.

6. The robotic vehicle according to any of claims 1 to 3, wherein the vehicle body comprises a cavity configured to receive a first multi-container frame lifted into the cavity by the first multi-container frame lifting device and configured to receive a second multi-container frame lifted into the cavity by the second multi-container frame lifting device, optionally, wherein the cavity comprises at least one guide configured to guide the first and/or second multi-container frame into the first compartment, optionally,
wherein the first and second multi-container frame lifting devices are positioned within the cavity when fully retracted.

7. The robotic vehicle according to any preceding claim, wherein the drive system comprises a wheel arrangement, optionally,
wherein the wheel arrangement is arranged on the vehicle body,
wherein the drive system is configured to drive the robotic vehicle in at least one of a first direction and a second direction along the rails of the rail system,
wherein the first direction and the second direction are orthogonal.

8. The robotic vehicle according to claim 7,
wherein the wheel arrangement comprises a first set of wheels and a second set of wheels,
wherein the first set of wheels is displaceable between a first position, in which the first set of wheels permits movement of the robotic vehicle along the first direction, and a second position, in which the second set of wheels permits movement of the robotic vehicle along the second direction.

9. An assembly comprising one or more multi-container frames and a robotic vehicle as claimed in any preceding claim.

10. The assembly of claim 9, wherein the multi-container frame comprises an interior space configured to accommodate a plurality of storage containers, optionally, wherein the plurality of storage containers are stored one on top of another in a vertical stack.

11. An automated storage and retrieval system, comprising:
a plurality of storage columns;
a rail system located above the storage columns;
a plurality of multi-container frames configured to be stored in the storage columns of the automated storage and retrieval system; and
a robotic vehicle according to any of claims 1 to 8.

12. The automated storage and retrieval system of claim 11, wherein the rail system comprises a first set of rails arranged in a horizontal plane and extending in a first direction and a second set of rails arranged in the horizontal plane and extending in a second direction which is orthogonal to the first direction, wherein the first and second sets of rails form a grid pattern comprising a plurality of grid cells in the horizontal plane, wherein each grid cell comprises a grid opening defined by rails of the first set of rails and rails of the second set of rails, and/or,
wherein each storage column is located vertically below a grid opening, and/or,
wherein each multi-container frame is configured to accommodate a plurality of storage containers in an interior space of the respective multi-container frame, optionally, wherein the plurality of storage containers are stored one on top of another in a vertical stack.

13. A method for operating a robotic vehicle according to any of the claims 1 to 8 in an automated storage and retrieval system, the method comprising:
lifting a first multi-container frame from a storage column of the automated storage and retrieval system using the first multi-container frame lifting device; and
lifting a second multi-container frame from a storage column of the automated storage and retrieval system using the second multi-container frame lifting device.

14. The method according to claim 13, further comprising the step of moving the robotic vehicle after lifting the first multi-container frame and before lifting the second multi-container frame and, such that the second multi-container frame lifting device lifts the second multi-container frame from the same storage column as the first multi-container frame, or,
wherein the first multi-container frame and the second multi-container frame are simultaneously lifted from different storage columns by the first multi-container frame lifting device and the second multi-container frame lifting device.

15. A computer readable medium comprising instructions which, when executed by one or more processors, cause a computer to perform the method of claim 13 or claim 14; or
a computer program comprising instructions which, when the program is executed by a computer, cause the computer to carry out the method of claim13 or claim 14; or
a controller comprising a processor and a memory, the controller configured to perform the method of claim13 or claim 14.
